(19) Europäisches Patentamt
European Patent Office
Office européen des brevets

(11) **EP 3 303 869 B1**

(12) **EUROPEAN PATENT SPECIFICATION**

(45) Date of publication and mention
of the grant of the patent:
**20.01.2021 Bulletin 2021/03**

(51) Int Cl.:
***F16D 65/08*** *(2006.01)*  ***F16D 65/092*** *(2006.01)*
***G01L 1/16*** *(2006.01)*

(21) Application number: **16730265.2**

(22) Date of filing: **27.05.2016**

(86) International application number:
**PCT/EP2016/061983**

(87) International publication number:
**WO 2016/189122 (01.12.2016 Gazette 2016/48)**

(54) **BRAKING DEVICE FOR VEHICLES**

BREMSVORRICHTUNG FÜR FAHRZEUGE

DISPOSITIF DE FREINAGE POUR VÉHICULES

(84) Designated Contracting States:
**AL AT BE BG CH CY CZ DE DK EE ES FI FR GB
GR HR HU IE IS IT LI LT LU LV MC MK MT NL NO
PL PT RO RS SE SI SK SM TR**

(30) Priority: **28.05.2015 IT UB20151291**

(43) Date of publication of application:
**11.04.2018 Bulletin 2018/15**

(73) Proprietor: **ITT Italia S.r.l.**
**20020 Lainate (IT)**

(72) Inventors:
• **SERRA, Stefano**
  **10060 San Pietro Val Lemina (TO) (IT)**
• **MARTINOTTO, Luca**
  **20025 Legnano (Italia) (IT)**
• **SIN XICOLA, Augusti**
  **10064 Pinerolo (Torino) (IT)**
• **MERLO, Fabrizio**
  **10064 Pinerolo (Torino) (IT)**
• **GALIMBERTI, Paolo**
  **12032 Barge (CN) (IT)**

(74) Representative: **Rapisardi, Mariacristina**
**Ufficio Brevetti Rapisardi S.r.l.**
**Via Serbelloni, 12**
**20122 Milano (IT)**

(56) References cited:
**EP-A1- 1 530 037    EP-A1- 2 570 691**
**EP-A1- 2 741 063    WO-A1-2014/170726**
**US-A- 5 099 962**

**Description**

The present invention relates to a sensorized braking device for vehicles.

From the Italian patent application No. TO2013A307 a braking device for vehicles is known, comprising a support element, a block of friction material supported by the support element, and one or more piezoceramic sensors supported by the support element and interposed between the block of friction material and the metallic support element.

During use on the vehicle, the piezoceramic sensors detect the forces that are exchanged in use between the block of friction material (brake pads or brake shoes for vehicles still equipped with drum brakes) and the element to be braked, disk or drum, which is bound to the wheel.

This entails the ability to detect and/or predict the generation of numerous problems, from an abnormal consumption of the brake pads, for example due to said brake pads "touching" the disc even when the brake is not actuated, for example due to poor alignment of the brake calipers, or rather noise, vibration and unwanted screeching during braking.

A braking device of this type can be vulnerable to temperatures and respectively to the pressures that such a device is subjected to during the manufacturing process and/or that develop during braking, higher even than 200°C and 400 kg/cm$^2$ respectively, resulting in negative effects in terms of performance, reliability and durability.

The purpose of the present invention is to provide a sensorized braking device for vehicles that within the use temperature interval and in particular up to use temperatures of at least 200°C is able to withstand stresses that are thermal in nature, allows for proper transmission to the piezoelectric sensors of the mechanical stresses to be detected whilst at the same time adequately protecting its components from excessive mechanical stresses that may cause damage or lead to malfunction.

Another purpose of the invention is to provide a sensorized braking device for vehicles that is capable of ensuring a stable response of the piezoelectric sensors with the temperature variations in the interval in working temperatures.

Not at last, a purpose of the present invention is to provide a sensorized braking device for vehicles that is both robust and resistant to high temperatures in order to increase its flexibility of use in applications not only for light and industrial vehicles but also for heavy vehicles (Trucks, Buses etc,) where the operating temperatures can exceed 600°C.

These and other purposes are achieved by means of a braking device for vehicles, comprising a support element supporting a block of friction material, an electrically insulated electrical circuit, and a plurality of piezoceramic sensors interposed between the block of friction material and the support element, said electrical circuit being connected to said plurality of piezoceramic sensors so as to pick up an electric response signal emitted by said plurality of piezoceramic sensors when said braking device is subjected to an external compression force, characterized in that on said support at each piezoceramic sensor a corresponding protective element is located, each piezoceramic sensor being embedded within the corresponding protective element, said protective element having one or more layers of resin-based material applied to protect said piezoceramic sensor, said protective element being configured to direct a predetermined part of said external compression force onto an area of the support element surrounding said piezoceramic sensor, said resin-based material being electrically and thermally insulating and being selected from among materials having substantially stable mechanical properties in a temperature interval comprised between -40°C and at least 200°C, so as to limit or cancel out the variation in the response signal with the temperature variations to which said plurality of piezoceramic sensors is exposed in said temperature interval, wherein said plurality of piezoceramic sensors is embedded within said plurality of protective element and said plurality of protective element is embedded into the block of friction material or into a damping layer interposed between the block of friction material and the support element.

Such mechanical properties include at least the elastic modulus and/or shear modulus.

Advantageously, in order to ensure adequate mechanical protection and at the same time adequate thermal and electrical insulation properties, the thickness of said protective element is not less than the thickness of said piezoceramic sensor.

By thickness of the piezoceramic sensor is meant its dimension in the direction that is orthogonal to its resting plate on the support element.

Advantageously said resin-based material has a curing temperature that is below the Curie temperature of the piezoceramic material that constitutes said piezoceramic sensor. The protection element can then be applied without risk of damaging the piezoceramic sensor before or after the latter's mechanical and electrical connection to the electrical circuit.

Advantageously said protective element has mechanical properties so as to limit the force transmitted to the piezoceramic sensor when the external compression force is applied to said block of friction material.

Advantageously, said protective element is configured to direct a predetermined part of said external compression force onto an area of the support element surrounding said at least one piezoceramic sensor.

Therefore, the protective element has various features as it functions as a mechanical protection against damage due to handling the braking element during the production process, it provides electrical insulation for the piezoceramic sensor and it functions as a limiter and deflector of the force transmitted to the piezoceramic sensor.

Choosing a material with mechanical properties that are stable over a wide temperature interval allows for a stable response from the piezoceramic sensors within the same temperature interval.

Further characteristics and advantages of the present invention will become clear from the following description of a non-limiting embodiment given purely by way of example and with reference to the drawings attached, in which:

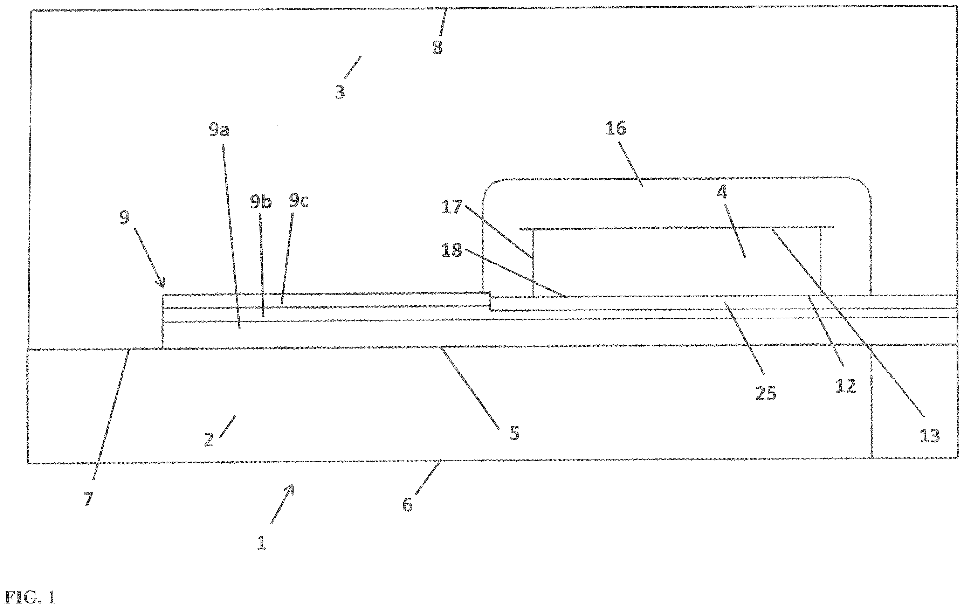

Figure 1 which illustrates schematically a raised section side view of the braking device;

Figure 2 shows the variation in the piezoceramic sensor response signal used in testing with a temperature variation of the brake pad, where the protective element of the piezoceramic sensor consists of a first type of resin-based material;

Figure 3 shows the variation in the shear modulus of the first type of resin-based material used in the tests as a function of temperature;

Figure 4 shows the variation in the capacitance of the piezoceramic sensor used in the tests as a function of temperature;

Figure 5 shows the variation in the piezoceramic sensor response signal used in testing as a temperature variation of the brake pad, where the protective element of the piezoceramic sensor consists of a second type of resin-based material;

Figure 6 shows a curve that ties the force experienced by the piezoceramic sensor as a result of applying an external compression force F as the elastic constant of the resin-based material, that forms the protective element, changes.

With reference to the figures, 1 indicates a sensorized braking device for vehicles as a whole, in the example illustrated a brake pad, that is intended to equip a vehicle braking system, which is known and not illustrated for the sake of simplicity.

Here and below specific reference will be made to a braking device formed of the brake pad 1, but it is clear that what follows is also identically applicable to the brake shoe of a drum brake.

The brake pad 1 comprises a support element 2, preferably but not necessarily metallic, and known as a "backplate", a block of friction material 3 supported by the element 2, and one or more piezoceramic sensors 4 supported by the support element 2 and interposed between the latter and the block of friction material 3.

The piezoceramic sensors 4 are supported in a raised arrangement on the support element 2.

It is clear that in the case of a brake shoe there could be elements corresponding to those described for the brake pad 1; therefore, for a person skilled in the art, the following description is easily transferable so that sensorized brake shoes can be constructed.

The support element 2 in particular is shaped like a flat plate having a first main planar surface 5 that is intended in use to face an element to be braked, such as a vehicle brake disc, and a second planar main surface 6 that is parallel to the first main planar surface 5.

The block of friction material 3 has in particular a first main planar surface 7 that is conjugated to the first planar surface 5 of the support element 2 and a second planar surface 8 that is parallel to the first planar surface 7, and intended in use for direct contact with the element to be braked.

The piezoceramic sensors 4 are able to detect the forces that are exchanged in use during the contact between the pad 1 and the element to be braked as a result of their inherent ability to emit an electrical signal when subjected to a mechanical stress.

For this purpose the support element 2 supports an electrically insulated electrical circuit 9 having electrical contacts to which the electrodes of piezoceramic sensors 4 are connected.

The electrical circuit 9 collects the electrical signal, which is generated without the need for an electrical power supply from piezoceramic sensors 4, when they are subjected to a mechanical stress in the direction of polarization.

The electrical signal emitted by the piezoceramic sensors 4 and collected by the electrical circuit 9 can either be processed in real time or at a later point in time.

The piezoceramic sensors 4 are made of piezoceramic materials with a Curie temperature greater than 200°C and are formed of a preferably cylindrical body that is polarized in the direction of its axis and delimited by a pair of opposite flat faces 12 and 13 that are arranged in use parallel to the main planar surfaces 5, 6 of the support element 2.

Preferably one of the faces 12, 13, in particular the one facing the electrical circuit 9, presents both of the electrical signal pick up electrodes.

The electrical circuit 9 has branches (not shown) that are suitably shaped in order to arrange the piezoceramic sensors 4 in discrete positions on the support element 2 and is also provided with an electrical connector (not shown) integrated at the edge of the support element 2.

In addition to the piezoceramic sensors, which are essentially pressure sensors, one or more temperature sensors and/or one or more shear force sensors that are electrically connected to the electrical circuit 9 may also optionally be integrated on the support element 2.

The electrically insulated electrical circuit 9 is preferably screen printed and applied directly onto the support element 2.

All of the sensors integrated into the support element 2 are installed onto the electrically insulated electrical circuit 9 from the side of the latter that faces the block of friction material 3. The sensors that are thus integrated into the support element 2 are highly capable of measuring the forces acting on the braking device during braking or in general during the running of the vehicle.

A damping layer (not shown) can be provided that is interposed between the block of friction material 3 and the support element 2.

The damping layer, if provided, has in particular a first main surface that is conjugated to the first planar surface 5 of the support element 2 and a second surface that is conjugated to the first planar surface 7 of the block of friction material 3.

Advantageously each piezoceramic sensor 4 is embedded within a corresponding protective element 16.

The protective element 16 is comprised of one or more layers of resin-based material selected from materials having substantially stable mechanical properties in a temperature interval comprised between -40°C and at least 200°C, so as to limit or cancel out the variation in the response signal with the temperature variations to which the piezoceramic sensor 4 is exposed in said temperature interval.

The expression "fairly stable" means, with reference to a variable magnitude, a maximum value of 30% and preferably not greater than 20% of its minimum value within the temperature interval of reference.

The protective element 16 is located on the support element 2 at the piezoceramic sensor 4.

For the electrical insulation of the piezoceramic sensor 4 the protective element 16 is made of electrically insulating material.

The protective element 16 is made from a material that is also thermally insulating.

In particular at least one layer of material of the protective element 16 can be electrically and thermally insulating, or else at least one electrically insulating layer and at least one thermally insulating layer could be envisaged.

The protective element 16 has, as we shall see, mechanical properties, and in particular the elastic modulus, which have been carefully chosen in order to limit the force transmitted to the piezoceramic sensor 4 when an external compression force is applied to the block of friction material 3.

The protective element 16 is in particular configured in order to direct at least part of the external compression force to an area of the support element 2 surrounding the piezoceramic sensor 4 itself.

Preferably, all of the other sensors and possibly also other components of the electrical circuit 9 have a respective protective element of the same type as that described above.

The protective element 16 completely embeds the piezoceramic sensor 4 and is made up of a half-shell having an internal direct or indirect contact surface 17 uniform with the external surface of the piezoceramic sensor 4 and a uniform direct or indirect rest base 18 on said support element 2.

The protective element 16 preferably is dome-shaped.

The resin that constitutes the protective element 16 is preferably a polyimide resin, or an epoxy resin, or a Bismaleimide resin, or a Cyanate-Ester resin or a mixture therein. These resins can be loaded with reinforcing particles, in particular a ceramic and/or metallic material, such as ceramic particles of alumina and/or metallic particles of aluminum.

In order to evaluate the progress in the response of the piezoceramic sensor as the operating temperature of brake pads changes, the following is the result of tests carried out on batches of brake pads that differ in the resin-based material that forms the protective element of the piezoceramic sensor.

TESTS ON THE FIRST BATCH OF BRAKE PADS

The tests were performed on standard Dyno benches for NVH and dynamometric measurements. In particular, the tests were conducted on a first batch of brake pads, in which the protective element of the piezoceramic sensor consists of an epoxy resin-based material commercially known by the name Hysol™ 9492 manufactured by Loctite™.

This epoxy resin-based material includes a first component of epoxy resin loaded with metallic particles of aluminum and ceramic particles of alumina, and a second amide-based component acting as a cross-linking catalyst.

The tests consisted of bench tests performed at different values of pressure from 5 to 40 Bar and with the temperature of the brake disc being controlled within the interval of 50 to 300°C.

The procedure used was as follows: 88 braking applications were made from 50 km/h to 2 km/h as per the following table.

| Braking applications | Braking pressure [Bar] | Brake disc temperature [°C] |
|---|---|---|
| 1-1-1-1-1-1-1-1 | 5-10-15-20-25-30-35-40 | 50 |
| 1-1-1-1-1-1-1-1 | 5-10-15-20-25-30-35-40 | 100 |
| 1-1-1-1-1-1-1-1 | 5-10-15-20-25-30-35-40 | 150 |

(continued)

| Braking applications | Braking pressure [Bar] | Brake disc temperature [°C] |
|---|---|---|
| 1-1-1-1-1-1-1-1 | 5-10-15-20-25-30-35-40 | 200 |
| 1-1-1-1-1-1-1-1 | 5-10-15-20-25-30-35-40 | 250 |
| 1-1-1-1-1-1-1-1 | 5-10-15-20-25-30-35-40 | 300 |
| 1-1-1-1-1-1-1-1 | 5-10-15-20-25-30-35-40 | 250 |
| 1-1-1-1-1-1-1-1 | 5-10-15-20-25-30-35-40 | 200 |
| 1-1-1-1-1-1-1-1 | 5-10-15-20-25-30-35-40 | 150 |
| 1-1-1-1-1-1-1-1 | 5-10-15-20-25-30-35-40 | 100 |
| 1-1-1-1-1-1-1-1 | 5-10-15-20-25-30-35-40 | 50 |

Regarding the temperature of the brake pad, its temperature is normally approximately half that of the brake disc.

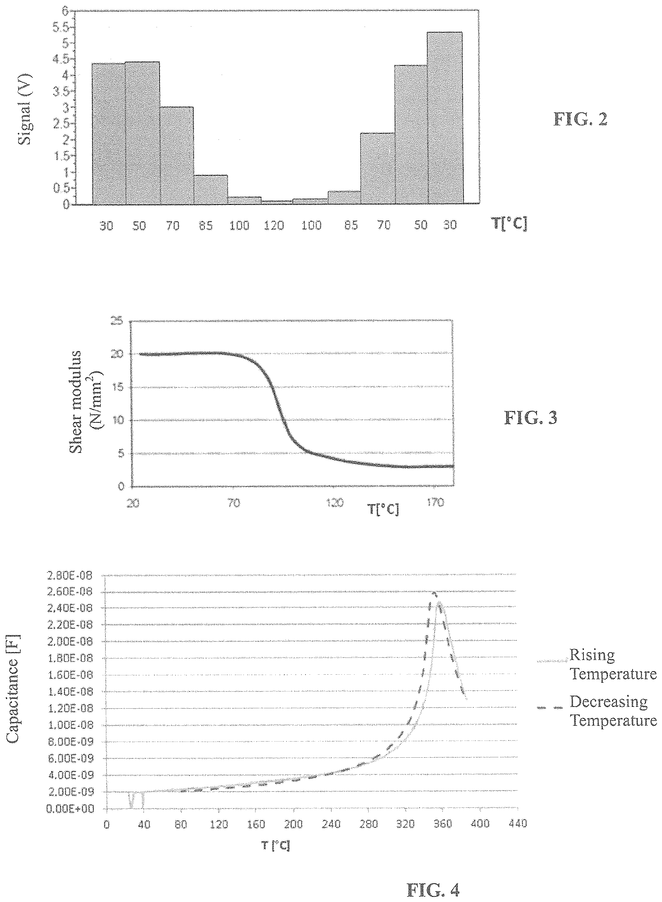

Figure 2 shows the progress in the piezoceramic sensor response signal as the temperature of the brake pad changes and at a braking pressure value of 20 Bar.

Similar results are obtained for the other values of braking pressure.

During the test a clear attenuation in the signal was observed already at low/moderate temperatures. For example, in fig. 2 the rapid decay can be seen at around 75-80°C. For the signal measured the amplitude of the second peak is represented (the one at the end of the braking) and reported according to the temperature of the brake pad as measured by a thermocouple on-board the brake pad. The choice of the second peak is linked only to the fact that being tied to the release of the pressure within the hydraulic circuit, it turns out to be more repeatable and thus provides results that are less affected by experimental errors.

The signal attenuation in fig. 2 is mainly due to the material used for the protective element. In this regard, in fig. 3 the variation in the mechanical characteristic (shear modulus) of the material used for the protective element can be seen within the temperature interval of interest.

Along with the signal attenuation there is also a secondary contribution due to the variation in the capacitance of the piezoceramic sensor (figure 4), though its impact is much lower than that due to the material used for the protective element. In fact the strong correlation is clear between the decline in the response of the brake pad between 70 and 100°C, and the corresponding decline in the mechanical properties of the material of the protective element. The dependence of the piezoceramic sensor on temperature only provides a small contribution, the electrical and mechanical characteristic of the piezoceramic sensor being approximately constant within the interval comprised between 70 and 100°C, while the change is practically linear and modest up to temperatures near to the Curie temperature of the piezoceramic sensor.

The conclusion of this test is that with the material used for the protective element the maximum obtainable temperatures that do not cause excessive losses in the signal from the sensor are approximately 70-85°C. Clearly, this temperature interval, which corresponds to temperatures at brake disc of 170°C or so, is unacceptable.

TESTS ON THE SECOND BATCH OF BRAKE PADS

Further tests were performed using for the protective element an epoxy resin-based material commercially known as Duralco™ 4703 produced by Cotronics™. This material essentially differs from the previous material by way of the concentration of reinforcement particles within the epoxy resin and the provision of specific functional groups within the epoxy chains.

The tests were performed on standard Dyno benches for NVH and dynamometric measurements.

The tests consisted of bench tests performed at different values of pressure from 10 to 40 Bar and with the temperature of the brake disc being controlled within the interval 50 to 500°C.

The procedure used was as follows: braking applications were made from 50 km/h to 2 km/h as per the following table.

| Braking applications | Pressure (Bar) | Brake disc temperature [°C] |
|---|---|---|
| 200 | 20 | 50 |
| 10-10-10-10 | 10-20-30-40 | 50 |

(continued)

| Braking applications | Pressure (Bar) | Brake disc temperature [°C] |
|---|---|---|
| 10-10-10-10 | 10-20-30-40 | 100 |
| 10-10-10-10 | 10-20-30-40 | 150 |
| 5-5-5-5 | 10-20-30-40 | 200 |
| 5-5-5-5 | 10-20-30-40 | 250 |
| 5-5-5-5 | 10-20-30-40 | 300 |
| 1-1-1-1 | 10-20-30-40 | 350 |
| 1-1-1-1 | 10-20-30-40 | 400 |
| 1-1-1-1 | 10-20-30-40 | 450 |
| 1-1-1-1 | 10-20-30-40 | 500 |
| 200 | 20 | 50 |

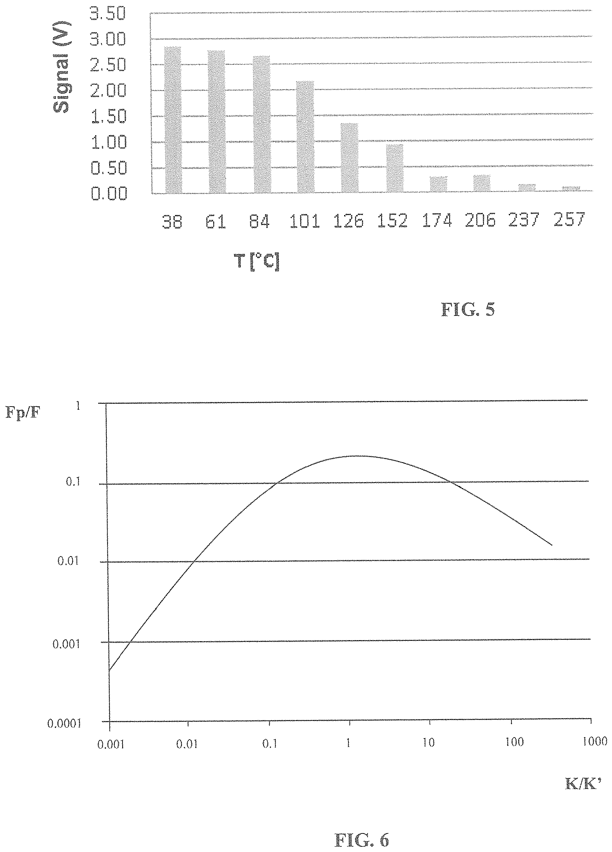

Figure 5 shows the progress in the piezoceramic sensor response signal as the temperature of the brake pad changes and at a braking pressure value of 20 Bar.

Similar results are obtained for the other values of braking pressure.

For each braking test the average brake pad and brake disc temperature was measured as a function of the second peak from the raw braking data; the average values were then subsequently reported as a function of the corresponding average temperature values.

In this case the signal attenuation begins to appear at much higher temperatures and in particular between 152-174°C at the brake pad.

In conclusion, the tests revealed very strong temperature dependence on the part of the response of the sensor due mainly to the thermal-mechanical properties of the material used for the protective element. The collapse of the signal is associated with the corresponding collapse of the mechanical properties of the material used.

The appropriate choice of material used for the protective element of the piezoceramic sensor makes it possible to stabilize the temperature response of the piezoceramic sensor itself.

As can be seen the thermo-mechanical properties of the protective element are important as regards the sensitivity of the piezoceramic sensor to an external compression force.

A suitable choice of thermo-mechanical properties allows to reduce the load of the forces actually experienced by the piezoceramic sensor during the production of the braking device or when the device is in operation.

Below we provide an explanation or how this occurs.

Let us assume the application of an external compression force F upon the friction material 3.

We refer to the stress situation acting upon a piezoceramic sensor 4.

The protective element 16 experiences a force whose resultant F' is different from the compression force F applied to the block of friction material 3.

Such a resultant force F' is also transmitted to the piezoceramic sensor 4 which experiences a final force $F_p$ which in general is also different from the force F' but obviously linked to it. $F_p$ is the force that induces the electrical signal that is effectively measured by the piezoceramic sensor.

We assume that the transfer of the external compression force F takes place from the surface of the block of friction material 3 to the underlying layers without appreciable tangential deformations, in other words, we assume that the block of friction material 3 is substantially rigid in the longitudinal direction.

In the model it is also assumed that the friction material and the protective element are represented in the mechanical model by springs with the elastic constants k and k' respectively, and that the linear dimensions of the spring relating to the block of friction material are the same as the block of friction material itself in the regions outside and within the area of application of the protective element.

Supposing therefore a linear elastic behavior of the materials, then Hooke's law is valid, according to which:

$$F=kx$$

$$F'=k'x'$$

$$F_p = k_p x_p$$

where x, x' and respectively $x_p$ represent the deformation in the direction of compression, k, k' and respectively $k_p$ the elastic constant.

It can be shown that:

$$F' = 2F/(1+k/k')$$

$$F_p = 4F/(1+k'/k_p)(1+k/k')$$

The force $F_p$ as experienced by the piezoceramic sensor 4 is therefore linked but not equal to the force F originally applied to the block of friction material 3. The force $F_p$ attenuation factor depends upon the choice of the ratios $k'/k_p$ and $k/k'$ and can be adjusted, with k and $k_p$ being equal, by increasing or decreasing the elastic constant k'.

It follows that once the block of friction material and the piezoceramic sensor are defined, which normally have quite strong limitations from the point of view of the variation in their mechanical properties as well as in terms of the requirements regarding their physical properties, the choice of the optimum values for k', or the mechanical properties of the protective element, then becomes crucial in order to optimize the transfer of forces.

By way of a significant as well as explanatory example, we will consider the result from the model assuming realistic values for k and $k_p$, in particular taken from the measurements of the elastic constants for the block of friction material and the piezoceramic sensor. The constant k' will instead be considered as a parametric variable to be chosen in order to optimize the response of the piezoceramic sensor.

Suppose then that $k_p=10^{11}$ N/m=$10^{11}$ N/m and k=$10^{10}$ N/m. These values of $k_p$ and k for the block of friction material and the piezoceramic sensor are values that are close to reality. In this case the relationship for $F_p/F$ depends only upon k'. Fig. 6 shows the response curve $F_p/F$ as a function of k/k' while considering the above values of $k_p$ and k. It is clear that there is an optimal value regarding the ratio between the mechanical constants k/k' that optimizes the response of piezoceramic sensor. Therefore, once the piezoceramic sensor and the block of friction material are fixed, then the protective element must be chosen carefully. For example, choosing materials that are too soft compared to the optimal value at the maximum point of the response curve will determine a weak coupling which will lead to the forces being transferred inefficiently, while choosing materials that are too hard, again with respect to the optimal value at the maximum point of the response curve, will lead to the deformation being transferred to the piezoceramic sensor inefficiently. With regard to fig. 6 it should be noted that a logarithmic scale has been applied to the abscissa and ordinate axes, with the result that, away from the maximum point of the response curve, an order of magnitude variation in the ratio of the elastic constants will have similar results also on the forces measured at the location of the piezoceramic sensor. Only by keeping the values of the elastic constants near the optimum value at the maximum point of the response curve will efficient transfer be maintained. This means that also the thermo-mechanical properties have to be selected with care in order to avoid, as a result of softening or hardening of the mechanical properties between the materials employed, loss of efficiency as a temperature variation. Working in the vicinity of the maximum point of the response curve results then in a further clear advantage, namely that the stability of the response is greatly superior also in the case of variations in the thermo-mechanical properties, even at large intervals.

Therefore, by suitably selecting the mechanical properties of the material composing the protective element (in the sense of softening or hardening), it is possible to maintain the load experienced by the piezoceramic sensors well below the maximum load bearable by this class of sensors during both the braking device production process and normal operation of the braking device.

For the purposes of the application under consideration, it has nevertheless been found convenient, for pre-determined values of $k_p$ and k, to choose k' such that Fp/F is not less than 0.01.

This means that also the thermo-mechanical properties have to be selected with care in order to avoid, as a result of softening or hardening of the mechanical properties between the materials employed, loss of efficiency as a temperature variation. Working in the vicinity of the maximum point becomes then a further clear advantage, namely that the stability of the response is greatly higher also in the case of variations in the thermo-mechanical properties, even at large intervals (even up to 200% without significant variations in said maximum point).

With reference to the tests carried out, the predictions of the simple mechanical model described above are accurate.

In fact, at low temperatures the ratio $\frac{k}{k'}$ for the first type of material adopted is close to 30, and involves a transmission efficiency of 10% which is very close to that which was actually measured. At high temperatures the phase transition of the material above 90°C induces a change in the elastic constant of about a factor 5. Given that we are within the region of linear behavior, the model predicts a corresponding collapse in the response of the sensor by a factor 6, which is further reduced as the temperature increases up to a further factor 10 i.e. up to an order of magnitude less, i.e. it provides an increase in efficiency of up to 1-2%, which is effectively what has been observed.

Unlike the second type of material that has a ratio $\frac{k}{k'}$ close to 10, i.e. closer to the maximum and in fact exhibits an efficiency of 30%, it suffers smaller variations, also in temperature, and only at higher values.

In conclusion, since the friction materials and the piezoceramic materials have reasonably stable mechanical properties within very wide temperature intervals, the choice of the material for the protection element must be made whilst applying logic that is based upon the graph of fig. 6. This means that the elastic constant for the material is chosen to be as close as possible to the maximum point of the graph of figure 6. This is in order to achieve the maximum response from the piezoceramic sensor with the greatest possible stability in the signals coming from the piezoceramic sensor also as a result of moderate reciprocal variations between the elastic constants of the materials.

## Claims

1.  A braking device for vehicles, comprising a support element (2) supporting a block of friction material (3), an electrically insulated electrical circuit (9), and a plurality of piezoceramic sensors (4) interposed between the block of friction material (3) and the support element (2), said electrical circuit (9) being connected to said plurality of piezoceramic sensors (4) so as to pick up an electric response signal emitted by said plurality of piezoceramic sensors (4) when said braking device is subjected to an external compression force, **characterized in that** on said support (2) at each piezoceramic sensor (4) a corresponding protective element (16) is located, each piezoceramic sensor being embedded within the corresponding protective element (16), said protective element (16) having one or more layers of resin-based material applied to protect said piezoceramic sensor (4), said protective element (16) being configured to direct a predetermined part of said external compression force onto an area of the support element (2) surrounding said piezoceramic sensor (4), said resin-based material being electrically and thermally insulating and being selected from among materials having substantially stable mechanical properties in a temperature interval comprised between -40°C and at least 200°C, so as to limit or cancel out the variation in the response signal with the temperature variations to which said plurality of piezoceramic sensors (4) is exposed in said temperature interval, wherein said plurality of piezoceramic sensors (4) is embedded within said plurality of protective element (16) and said plurality of protective element (16) is embedded into the block of friction material (3) or into a damping layer interposed between the block of friction material (3) and the support element (2).

2.  The braking device for vehicles according to claim 1, **characterized in that** said resin-based material has a cross-linking temperature that is lower than the Curie temperature of the piezoceramic material constituting said piezoceramic sensor (4).

3.  The braking device for vehicles according to claim 1, **characterized in that** the thickness of said protective element (16) is not less than the thickness of said piezoceramic sensor (4).

4.  The braking device for vehicles according to claim 1, **characterized in that** said resin-based material comprises an epoxy resin.

5.  The braking device for vehicles according to claim 1, **characterized in that** said resin-based material comprises a polyimide resin.

6.  The braking device for vehicles according to claim 1, **characterized in that** said resin-based material comprises a bismaleimide resin.

7.  The braking device for vehicles according to claim 1, **characterized in that** said resin-based material comprises a cyanate ester resin.

8.  The braking device for vehicles according to claim 1, **characterized in that** said resin-based material comprises a resin filled with ceramic and/or metal particles.

**9.** A vehicle **characterized in that** it incorporates at least a braking device according to any preceding claim.

**Patentansprüche**

**1.** Bremsvorrichtung für Fahrzeuge, umfassend ein Trägerelement (2), das einen Reibmaterialblock (3) trägt, eine elektrisch isolierte elektrische Schaltung (9) und mehrere piezokeramische Sensoren (4), die zwischen dem Reibmaterialblock (3) und dem Trägerelement (2) angeordnet sind, wobei die elektrische Schaltung (9) mit den mehreren piezokeramischen Sensoren (4) verbunden ist, um ein elektrisches Reaktionssignal aufzunehmen, das von den mehreren piezokeramischen Sensoren (4) ausgesendet wird, wenn die Bremsvorrichtung einer externen Kompressionskraft ausgesetzt wird, **dadurch gekennzeichnet, dass** an dem Träger (2) an jedem piezokeramischen Sensor (4) ein entsprechendes Schutzelement (16) angeordnet ist, jeder piezokeramische Sensor in das entsprechende Schutzelement (16) eingebettet ist, das Schutzelement (16) eine oder mehrere Schichten aus harzbasiertem Material aufweist, die aufgebracht sind, um den piezokeramischen Sensor (4) zu schützen, wobei das Schutzelement (16) konfiguriert ist, einen vorbestimmten Teil der externen Kompressionskraft auf einen Bereich des Trägerelements (2) zu richten, der den piezokeramischen Sensor (4) umgibt, und das harzbasierte Material elektrisch und thermisch isolierend ist und aus Materialien ausgewählt ist, die im Wesentlichen stabile mechanische Eigenschaften in einem Temperaturintervall zwischen -40 °C und mindestens 200 °C aufweisen, um die Schwankung des Reaktionssignals mit den Temperaturschwankungen, denen die mehreren piezokeramischen Sensoren (4) in dem Temperaturintervall ausgesetzt sind, zu begrenzen oder aufzuheben, wobei die mehreren piezokeramischen Sensoren (4) in die mehreren Schutzelemente (16) eingebettet sind und die mehreren Schutzelemente (16) in den Reibmaterialblock (3) oder in eine Dämpfungsschicht, die zwischen dem Reibmaterialblock (3) und dem Trägerelement (2) angeordnet ist, eingebettet sind.

**2.** Bremsvorrichtung für Fahrzeuge nach Anspruch 1, **dadurch gekennzeichnet, dass** das harzbasierte Material eine Vernetzungstemperatur aufweist, die niedriger ist als die Curie-Temperatur des piezokeramischen Materials, das den piezokeramischen Sensor (4) bildet.

**3.** Bremsvorrichtung für Fahrzeuge nach Anspruch 1, **dadurch gekennzeichnet, dass** die Dicke des Schutzelements (16) nicht kleiner als die Dicke des piezokeramischen Sensors (4) ist.

**4.** Bremsvorrichtung für Fahrzeuge nach Anspruch 1, **dadurch gekennzeichnet, dass** das harzbasierte Material ein Epoxidharz umfasst.

**5.** Bremsvorrichtung für Fahrzeuge nach Anspruch 1, **dadurch gekennzeichnet, dass** das harzbasierte Material ein Polyimidharz umfasst.

**6.** Bremsvorrichtung für Fahrzeuge nach Anspruch 1, **dadurch gekennzeichnet, dass** das harzbasierte Material ein Bismaleimidharz umfasst.

**7.** Bremsvorrichtung für Fahrzeuge nach Anspruch 1, **dadurch gekennzeichnet, dass** das harzbasierte Material ein Cyanatesterharz umfasst.

**8.** Bremsvorrichtung für Fahrzeuge nach Anspruch 1, **dadurch gekennzeichnet, dass** das harzbasierte Material ein mit Keramik- und/oder Metallpartikeln gefülltes Harz umfasst.

**9.** Fahrzeug, **dadurch gekennzeichnet, dass** es mindestens eine Bremsvorrichtung nach einem der vorstehenden Ansprüche umfasst.

**Revendications**

**1.** Dispositif de freinage pour véhicules, comprenant un élément de support (2) supportant un bloc de matériau de friction (3), un circuit électrique isolé électriquement (9), et une pluralité de capteurs piézocéramiques (4) interposés entre le bloc de matériau de friction (3) et l'élément de support (2), ledit circuit électrique (9) étant connecté à ladite pluralité de capteurs piézocéramiques (4) afin de capter un signal de réponse électrique émis par ladite pluralité de capteurs piézocéramiques (4) lorsque ledit dispositif de freinage est soumis à une force de compression externe, **caractérisé en ce que** sur ledit support (2) sur chaque capteur piézocéramique (4) un élément de protection correspondant (16) est situé, chaque capteur piézocéramique étant intégré dans l'élément de protection correspondant (16), ledit élément de protection (16) ayant une ou plusieurs couches de matériau à base de résine appliquées pour protéger ledit capteur piézocéramique (4), ledit élément de protection (16) étant configuré pour diriger une partie prédéterminée de ladite force de compression externe sur une zone de l'élément de support (2) entourant ledit capteur piézocéramique (4), ledit matériau à base de résine étant électriquement et thermiquement isolant et étant sélectionné parmi des matériaux ayant des propriétés mécaniques sensiblement stables dans un intervalle de température compris entre -40°C et au moins 200°C, afin de limiter ou d'annuler la variation dans le signal de réponse avec les variations de température auxquelles ladite pluralité de capteurs piézocéramiques (4) est exposée dans ledit intervalle de température, dans lequel ladite pluralité de capteurs piézocéramiques (4) est intégrée dans ladite pluralité d'éléments de protection (16) et ladite pluralité d'éléments de protection (16) est intégrée dans le bloc de matériau de friction (3) ou dans une couche d'amortissement interposée entre le bloc de matériau de friction (3) et l'élément de support (2).

2. Dispositif de freinage pour véhicules selon la revendication 1, **caractérisé en ce que** ledit matériau à base de résine a une température de réticulation qui est inférieure à la température de Curie du matériau piézocéramique constituant ledit capteur piézocéramique (4).

3. Dispositif de freinage pour véhicules selon la revendication 1, **caractérisé en ce que** l'épaisseur dudit élément de protection (16) n'est pas inférieure à l'épaisseur dudit capteur piézocéramique (4).

4. Dispositif de freinage pour véhicules selon la revendication 1, **caractérisé en ce que** ledit matériau à base de résine comprend une résine époxy.

5. Dispositif de freinage pour véhicules selon la revendication 1, **caractérisé en ce que** ledit matériau à base de résine comprend une résine polyimide.

6. Dispositif de freinage pour véhicules selon la revendication 1, **caractérisé en ce que** ledit matériau à base de résine comprend une résine bismaléimide.

7. Dispositif de freinage pour véhicules selon la revendication 1, **caractérisé en ce que** ledit matériau à base de résine comprend une résine d'ester de cyanate.

8. Dispositif de freinage pour véhicules selon la revendication 1, **caractérisé en ce que** ledit matériau à base de résine comprend une résine remplie de particules céramique et/ ou métalliques.

9. Véhicule, **caractérisé en ce qu'**il incorpore au moins un dispositif de freinage selon l'une quelconque des revendications précédentes.

FIG. 1

FIG. 2

FIG. 3

FIG. 4

FIG. 5

FIG. 6

**EP 3 303 869 B1**

REFERENCES CITED IN THE DESCRIPTION

*This list of references cited by the applicant is for the reader's convenience only. It does not form part of the European patent document. Even though great care has been taken in compiling the references, errors or omissions cannot be excluded and the EPO disclaims all liability in this regard.*

**Patent documents cited in the description**

- IT TO2013A307